(19)

**Europäisches Patentamt**
**European Patent Office**
**Office européen des brevets**

(11) **EP 4 667 741 A1**

(12) **EUROPEAN PATENT APPLICATION**

(43) Date of publication:
**24.12.2025 Bulletin 2025/52**

(21) Application number: **25181927.2**

(22) Date of filing: **11.06.2025**

(51) International Patent Classification (IPC):
**F03D 7/02** *(2006.01)* **F03D 17/00** *(2016.01)*
**F03D 7/04** *(2006.01)*

(52) Cooperative Patent Classification (CPC):
**F03D 7/0292; F03D 17/011;** F03D 7/046;
F05B 2260/84; F05B 2270/32; F05B 2270/3201;
F05B 2270/332

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.06.2024 JP 2024099368**

(71) Applicant: **Hitachi, Ltd.**
**Tokyo 100-8280 (JP)**

(72) Inventors:
• **OKUNO, Azuma**
**Tokyo 100-8280 (JP)**
• **TAKEDA, Norio**
**Tokyo 100-8280 (JP)**
• **MATSUOKA, Seiichi**
**Tokyo 100-8280 (JP)**
• **FUNABASHI, Shigehisa**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **CONTROL SUPPORT SYSTEM FOR WIND POWER GENERATION APPARATUS AND CONTROL SUPPORT METHOD FOR WIND POWER GENERATION APPARATUS**

(57) Provided are a control support system for a wind power generation apparatus and a control support method for a wind power generation apparatus capable of minimizing component damage and maximizing the power generation amount.

A control support system 1 for a wind power generation apparatus is a control support system 1 for a wind power generation apparatus 101 including at least one wind power generation apparatus 101 and a calculation processing unit 104. The calculation processing unit 104 includes: a damage database creation unit 108 configured to create a database of a damage degree that is caused in the wind power generation apparatus 101 with respect to a wind-condition parameter; a calculation unit of damage degree per power generation amount 110 configured to calculate a damage degree per power generation amount based on wind-condition data and operation data of the wind power generation apparatus 101; an input unit 109 configured to receive input of a use period and a damage degree upper limit value of the wind power generation apparatus 101; and a calculation unit of wind speed threshold for each wind direction 112 configured to calculate a wind speed threshold for operating the wind power generation apparatus 101 for each wind direction based on the database 401 of the damage degree and the use period and the damage degree upper limit value of the wind power generation apparatus 101.

FIG. 1

## Description

Technical Field

The present invention relates to a control support system for a wind power generation apparatus and a control support method for a wind power generation apparatus.

Background Art

As a measure against global warming, renewable energy such as wind power, water power, and sunlight has attracted significant attention. In particular, since wind power generation has advantages such as a simple configuration, an easy increase in size, a relatively low power generation cost, and safety, the market is expected to expand worldwide. In general, a wind power generation apparatus has a rotor in which a plurality of blades are attached to a hub, and drives a generator by the rotational energy of the rotor that rotates by receiving wind.

The wind power generation apparatus generates power using wind that changes from moment to moment as an energy source. Therefore, when the wind speed and disturbance of the wind actually flowing into the wind power generation apparatus are more severe than the design conditions, the load of the wind power generation apparatus increases, and damage to the components and the like may occur. When damage occurs, it takes time to arrange a replacement part, equipment for construction, workers, and the like in addition to the time required to replace the damaged part. Therefore, there is a concern that the operation stop time of the wind power generation apparatus increases and the power generation amount decreases as compared with the case of performing planned part replacement. Therefore, as a countermeasure, there is a method of estimating the damage degree of the components of the wind power generation apparatus and reducing the load by stopping the operation in advance or reducing the rated output in a case where damage is assumed. In particular, in a wind power generation apparatus installed in a mountainous area or a wind farm in which a plurality of wind power generation apparatuses are installed, the wind condition varies depending on the wind direction due to the influence of topography, buildings, other wind turbines, and the like, and the wind condition greatly contributes to damage of components. Therefore, a method (sector management) has been devised for extending the life of components by changing the cutout wind speed, which is the maximum wind speed at which the wind power generation apparatus operates, for each wind direction.

PTL 1 proposes a method in which a fatigue equivalent load is calculated for each wind direction, the calculated fatigue equivalent load is compared with a reference load determined from a service life of the wind turbine, and when their difference exceeds a predetermined threshold, a cutout wind speed of a currently adopted operation restriction is updated for each wind direction according to the difference.

In addition, PTL 2 describes a method of obtaining a damage degree per generated power with respect to the wind speed, and performing a degraded operation when the obtained damage degree per generated power exceeds a specified value.

Citation List

Patent Literature

PTL 1: JP 5244502
PTL 2: JP 2020-112035A

Summary of Invention

Technical Problem

PTL 1 discloses a method of avoiding a component failure or the like by controlling the operation of the wind power generation apparatus for each wind direction so that fatigue damage does not reach a prescribed threshold, and it is possible to avoid a loss of a power generation amount caused by an operation stop due to a failure. However, since the wind speed at which the operation is limited is calculated from the difference between the fatigue equivalent load calculated for each wind direction and the reference load for each wind direction used in the preliminary examination, the total power generation amount is not maximized.

In addition, in PTL 2, the wind speed at which a degraded operation is performed is determined from the damage degree per generated power with respect to the wind speed. However, in a case where wind-condition parameters such as the turbulence intensity and windshear, which contribute to damage in particular in a mountainous area and the like, vary depending on the wind direction, the influence thereof is not considered.

Therefore, the present invention provides a control support system for a wind power generation apparatus and a control support method for a wind power generation apparatus capable of minimizing component damage and maximizing the power generation amount.

Solution to Problem

To solve the aforementioned problems, a control support system for a wind power generation apparatus according to the present invention is a control support system for a wind power generation apparatus including at least one wind power generation apparatus and a calculation processing unit, in which the calculation processing unit includes: a damage database creation unit configured to create a database of a damage degree that is caused in the wind power generation apparatus with respect to a wind-condition parameter; a calculation unit of damage degree per power generation amount configured to calculate a damage degree per power generation amount based on wind-condition data and operation data of the wind power generation apparatus; an input unit configured to receive input of a use period and a damage degree upper limit value of the wind power generation apparatus; and a calculation unit of wind speed threshold for each wind direction configured to calculate a wind speed threshold for operating the wind power generation apparatus for each wind direction based on the database of the damage degree and the use period and the damage degree upper limit value of the wind power generation apparatus.

Furthermore, a control support method for a wind power generation apparatus according to the present invention is a control support method for a wind power generation apparatus including at least one wind power generation apparatus and a calculation processing unit, the method including: a damage database creation step of creating, by a damage database creation unit, a database of a damage degree that is caused in the wind power generation apparatus with respect to a wind-condition parameter; a step of calculating, by a calculation unit of damage degree per power generation amount, a damage degree per power generation amount based on wind-condition data and operation data of the wind power generation apparatus; a step of receiving, by an input unit, input of a use period and a damage degree upper limit value of the wind power generation apparatus; and a step of calculating, by a calculation unit of wind speed threshold for each wind direction, a wind speed threshold for operating the wind power generation apparatus for each wind direction based on the database of the damage degree and the use period and the damage degree upper limit value of the wind power generation apparatus.

Advantageous Effects of Invention

According to the present invention, it is possible to provide a control support system for a wind power generation apparatus and a control support method for a wind power generation apparatus capable of minimizing component damage and maximizing the power generation amount.

Problems, configurations, and effects other than those described above will be clarified by the following description of embodiments.

Brief Description of Drawings

[FIG. 1] FIG. 1 is a diagram illustrating a schematic configuration for a control support system for a wind power generation apparatus according to a first embodiment of the present invention.
[FIG. 2] FIG. 2 is a flowchart illustrating a processing flow of the control support system for the wind power generation apparatus illustrated in FIG. 1.
[FIG. 3] FIG. 3 is a functional block diagram of a damage database creation unit constituting the calculation processing unit illustrated in FIG. 1.
[FIG. 4] FIG. 4 is a diagram illustrating an example of a damage database.
[FIG. 5] FIG. 5 is a diagram illustrating an example of a data format of damage degree per power generation amount.
[FIG. 6] FIG. 6 is an example of description of a calculation unit of damage degree threshold per power generation amount constituting the calculation processing unit illustrated in FIG. 1.
[FIG. 7] FIG. 7 is an example of description of a calculation unit of wind speed threshold for each wind direction constituting the calculation processing unit illustrated in FIG. 1.
[FIG. 8] FIG. 8 is a diagram illustrating an example of a relationship between the wind speed and the turbulence intensity.
[FIG. 9] FIG. 9 is a diagram illustrating an example of wind speed threshold display for each wind direction.

[FIG. 10] FIG. 10 is a diagram illustrating a schematic configuration for a control support system for a wind power generation apparatus according to a second embodiment of the present invention.

[FIG. 11] FIG. 11 is a flowchart illustrating a processing flow of the control support system for the wind power generation apparatus illustrated in FIG. 10.

[FIG. 12] FIG. 12 is a diagram illustrating an example of effect display of sector management.

[FIG. 13] FIG. 13 is a diagram illustrating a schematic configuration of a control support system for a wind power generation apparatus according to a third embodiment of the present invention.

[FIG. 14] FIG. 14 is a flowchart illustrating a processing flow of the control support system for the wind power generation apparatus illustrated in FIG. 13.

[FIG. 15] FIG. 15 is a diagram illustrating a schematic configuration of a control support system for a wind power generation apparatus according to a fourth embodiment of the present invention.

[FIG. 16] FIG. 16 is a flowchart illustrating a processing flow of the control support system for the wind power generation apparatus illustrated in FIG. 15.

[FIG. 17] FIG. 17 is an example of display of analysis results of contribution degrees of wind-condition parameters to the damage degree.

Description of Embodiments

Hereinafter, embodiments of the present invention will be described with reference to the drawings.

[First Embodiment]

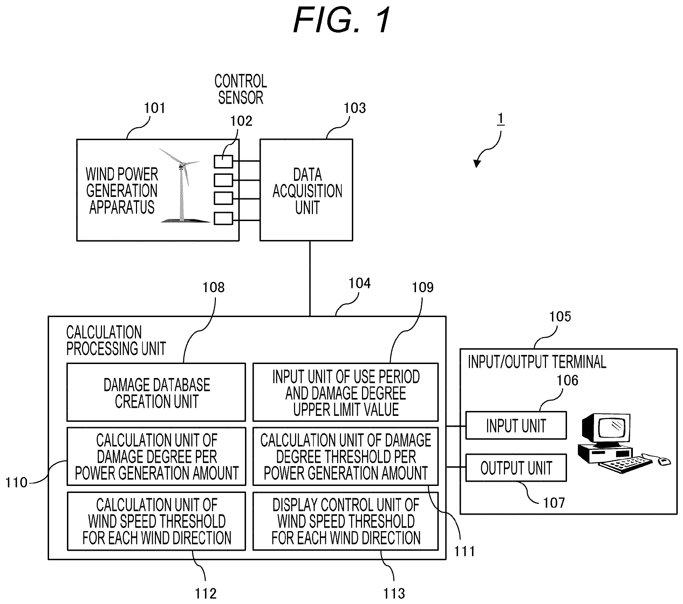

FIG. 1 is a diagram illustrating a schematic configuration of a control support system for a wind power generation apparatus according to a first embodiment of the present invention.

As illustrated in FIG. 1, a control support system 1 for a wind power generation apparatus according to the present embodiment mainly includes a wind power generation apparatus 101, a control sensor 102, a data acquisition unit 103, a calculation processing unit 104, and an input/output terminal 105. These devices may be connected to each other via a network such as the Internet or an intranet. In addition, they may be connected so as to be able to communicate with each other regardless of whether they are wired or wireless.

The control sensor 102 is attached to the wind power generation apparatus 101, and measures various states of the wind power generation apparatus 101 such as the wind speed, wind direction, blade pitch angle, nacelle azimuth angle, rotor azimuth angle, generator speed, and power generation amount necessary for controlling the wind power generation apparatus 101.

The calculation processing unit 104 includes a damage database creation unit 108, an input unit of use period and damage degree upper limit value 109, a calculation unit of damage degree per power generation amount 110, a calculation unit of damage degree threshold per power generation amount 111, a calculation unit of wind speed threshold for each wind direction 112, and a display control unit of wind speed threshold for each wind direction 113. Here, the damage database creation unit 108, the input unit of use period and damage degree upper limit value 109, the calculation unit of damage degree per power generation amount 110, the calculation unit of damage degree threshold per power generation amount 111, the calculation unit of wind speed threshold for each wind direction 112, and the display control unit of wind speed threshold for each wind direction 113 may be implemented by a processor such as a central processing unit (CPU) (not illustrated), a ROM that stores various programs, a RAM that temporarily stores data in a calculation process, and a storage device such as an external storage device, and the processor such as the CPU reads and executes the various programs stored in the ROM and stores a calculation result that is an execution result in the RAM or the external storage device.

The input/output terminal 105 includes an input unit 106 and an output unit 107. The input unit 106 includes various input devices such as a keyboard and a mouse, and is used when a user inputs regarding the control support system 1 for the wind power generation apparatus. The output unit 107 is an output device such as a display device, and displays a screen for a process and a result of processing by the calculation processing unit 104 or interactive processing for the user of the control support system 1 for the wind power generation apparatus.

The damage database creation unit 108 calculates damage caused in an evaluation section such as a tower or a blade with respect to the wind-condition parameters (wind speed, turbulence intensity, windshear, etc.) and stores the damage as a database (damage database). Here, the windshear is a power index of the wind speed distribution in the vertical direction of the wind power generation apparatus 101.

The input unit of use period and damage degree upper limit value 109 receives input of the use period and the damage degree upper limit value desired by the user.

The calculation unit of damage degree per power generation amount 110 calculates the damage degree per power generation amount for each wind direction from the control data and the damage database of the wind power generation apparatus 101.

The calculation unit of damage degree threshold per power generation amount 111 calculates a damage degree threshold per power generation amount, which is an upper limit value of the damage degree during the use period, from the use period and the damage degree upper limit value input by the input unit of use period and damage degree upper limit value 109, and the damage degree per power generation amount calculated by the calculation unit of damage degree per power generation amount 110.

The calculation unit of wind speed threshold for each wind direction 112 calculates a wind speed threshold for each wind direction from the damage degree threshold per power generation amount calculated by the calculation unit of damage degree threshold per power generation amount 111, the damage database, and the control data.

The display control unit of wind speed threshold for each wind direction 113 performs control so that the wind speed threshold calculated by the calculation unit of wind speed threshold for each wind direction 112 is presented to the user of the control support system 1 for the wind power generation apparatus by the input/output terminal 105.

In the present embodiment, a case where one wind power generation apparatus 101 and the calculation processing unit 104 are included will be described as an example, but the present invention is not limited thereto. For example, it may be a wind farm including a plurality of wind power generation apparatuses 101 and one calculation processing unit 104, or a wind farm in which one wind power generation apparatus 101 and a plurality of calculation processing units 104 are installed. The same applies to second to fourth embodiments described later.

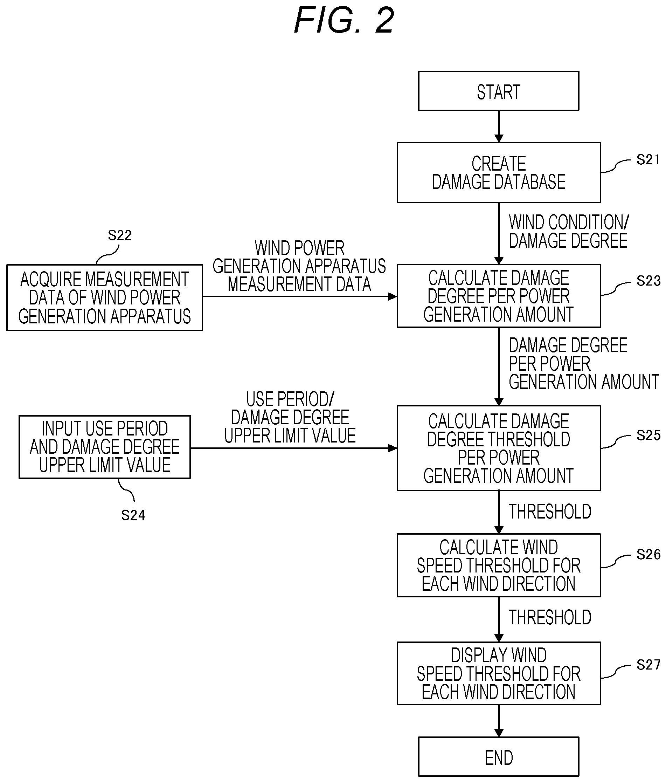

Next, a flow of processing by the control support system 1 for the wind power generation apparatus according to the present embodiment will be described. FIG. 2 is a flowchart illustrating a processing flow of the control support system for the wind power generation apparatus illustrated in FIG. 1.

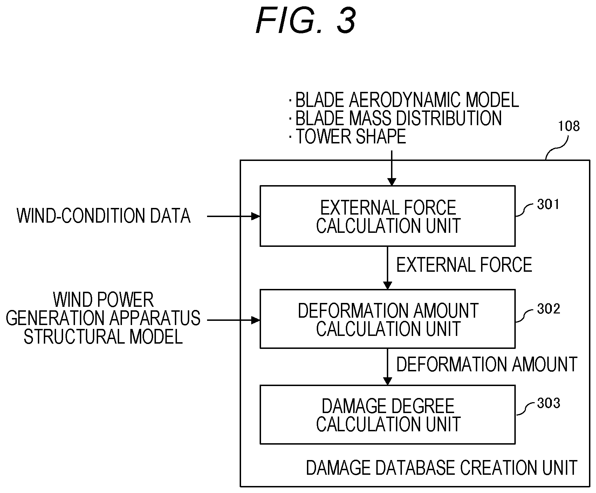

As shown in FIG. **2,** first, in step S21, the damage database creation unit 108 calculates damage to be caused in the components with respect to the wind condition assumed in the wind power generation apparatus 101, and stores the damage as a database (damage database). Here, a calculation method by physical analysis will be described. FIG. 3 is a functional block diagram of a damage database creation unit constituting the calculation processing unit illustrated in FIG. 1. As illustrated in FIG. 3, the damage database creation unit 108 includes an external force calculation unit 301, a deformation amount calculation unit 302, and a damage degree calculation unit 303. Here, the damage database creation unit 108, the external force calculation unit 301, the deformation amount calculation unit 302, and the damage degree calculation unit 303 are realized by, for example, a processor such as a central processing unit (CPU) (not illustrated), a ROM that stores various programs, a RAM that temporarily stores data in a calculation process, and a storage device such as an external storage device, and the processor such as the CPU reads and executes the various programs stored in the ROM and stores a calculation result that is an execution result in the RAM or the external storage device.

In the damage degree calculation by physical analysis, the load is estimated from the wind-condition parameters and the specification information of the wind power generation apparatus 101. First, the external force calculation unit 301 calculates the fluid force generated in the tower or the blade and the force due to its own weight from wind-condition parameters including at least the wind speed, the turbulence intensity, and the windshear, the blade aerodynamic model, the blade mass distribution, the tower shape, and the like. For example, the fluid force generated in the blade is estimated from an aerodynamic model of the blade including the cross-sectional shape of the blade and the like using the blade element momentum theory and the like. Also, the fluid force applied to the tower is calculated using, for example, a drag coefficient corresponding to the cross-sectional shape of the tower. Next, the deformation amount calculation unit 302 calculates the deformation amount and the like of the wind power generation apparatus 101 on the basis of a structural model and the like of the wind power generation apparatus 101 from the external force calculated by the external force calculation unit 301. For example, displacement, speed, acceleration, and the like of each component of the wind power generation apparatus 101 are calculated from a finite element model such as the following expression (1).

[Mathematical expression 1]

$$M\ddot{x} + C\dot{x} + Kx = F \qquad \cdots(1)$$

Here, $x, \dot{x},$ and $\ddot{x}$ are displacement, speed, and acceleration, respectively, of the node of the finite element model of the wind power generation apparatus.

M, C, and K are the mass matrix, the viscous matrix, and the rigid matrix, respectively, of the finite element model of the wind power generation apparatus. F is an external force calculated by the external force calculation unit 301.

Next, the damage degree calculation unit 303 calculates stress and moment generated in each component of the wind power generation apparatus 101 from the deformation amount of the wind power generation apparatus 101 estimated by the deformation amount calculation unit 302 to calculate the damage degree. In the calculation of the damage degree, the rainflow method is applied to the time-series data of the stress for a certain period (for example, 10 minutes), the frequency for each range of various stress amplitudes included in the time-series data is calculated, and from the frequency, the current damage degree of the wind power generation apparatus 101 is calculated by the following expression (2) using Miner's law and the like.
[Mathematical expression 2]

$$D = \sum_i \frac{n_i}{N_i} \qquad \cdots (2)$$

Here, D is the fatigue damage, the subscript i is the range number of the stress amplitude, $n_i$ is the frequency counted by the rainflow method, and $N_i$ is the allowable number of repetitions according to the S/N diagram.

The damage degrees of the components with respect to the wind condition calculated by the above method are stored as a database (damage database).

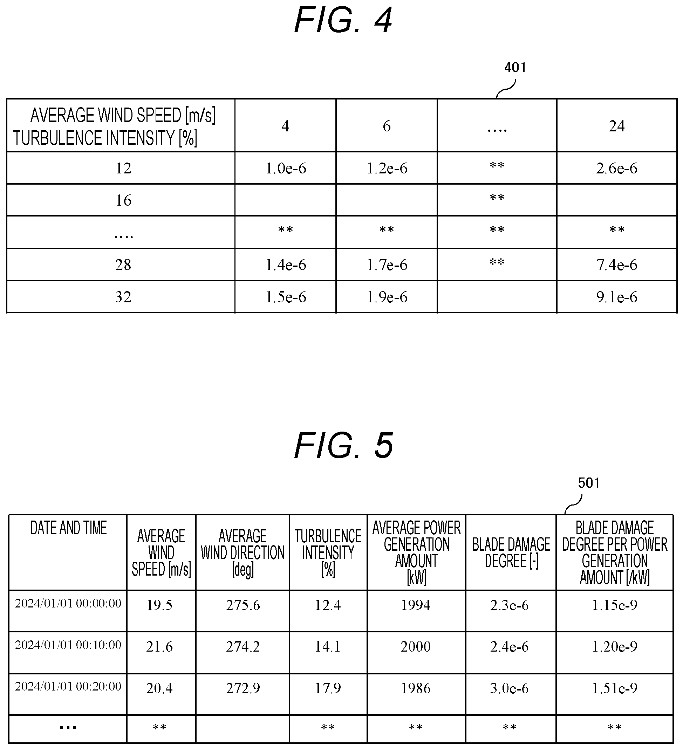

FIG. 4 is a diagram illustrating an example of a damage database. In the damage database 401 illustrated in FIG. 4, for example, the damage degrees with respect to the average wind speed (m/s) and the turbulence intensity (%) for 10 minutes are stored in a table format. When the average wind speed (m/s) is 4 (m/s) and the turbulence intensity (%) is 12 (%), the damage degree is "1.0e-6", and when the average wind speed (m/s) is 24 (m/s) and the turbulence intensity (%) is 32 (%), the damage degree is "9.1e-6". As can be seen from FIG. 4, the damage degree increases as the average wind speed (m/s) and the turbulence intensity (%) increase. In other words, in the table of FIG. 4, the damage degree increases diagonally downward to the right. Although the physical analysis method has been described here, for example, a strain sensor may be installed in the wind power generation apparatus 101 operating in an evaluation target or a similar environment, and the damage degrees for a certain period may be calculated from the measurement value and used as the damage database 401. Also, as an index to be evaluated, not the damage degree but another index such as a fatigue equivalent load may be used.

Next, referring back to FIG. 2, in step S22, the data acquisition unit 103 acquires data regarding the state of the wind power generation apparatus 101 and wind conditions measured by the control sensor 102. In step S23, the calculation unit of damage degree per power generation amount 110 refers to the damage degree of the corresponding wind condition from the damage database 401 with respect to the measurement data acquired in step S22, and divides the damage degree by the power generation amount to calculate the damage degree per power generation amount. The damage degree may be referred to by dividing the values of the wind speed, the turbulence intensity, and the windshear by bins and using the corresponding damage degree, or a regression model generated by a polynomial equation, a response surface method, or machine learning may also be used. Also, as the power generation amount, actual measurement data may be used, or a power curve that is a specification of the power generation amount with respect to the wind speed may be used. Here, as an example, a form example of the calculated damage degree per power generation amount is illustrated in FIG. 5. FIG. 5 is a diagram illustrating an example of a data format of damage degree per power generation amount. In the example illustrated in FIG. 5, "date and time", "average wind speed (m/s)", "average wind direction (deg)", "turbulence intensity (%)", "average power generation amount (kW)", "blade damage degree (-)", and "blade damage degree per power generation amount (/kW)" are stored in a table form in time series. Here, it is also found that the "blade damage degree per power generation amount (/kW)" increases when the "average wind speed (m/s)" and the "turbulence intensity (%)" are high. Specifically, when the "average wind speed (m/s)" is 20.4 (m/s) and the "turbulence intensity (%)" is 17.9 (%), the "blade damage degree per power generation amount (/kW)" is 1.51e-9 (/kW).

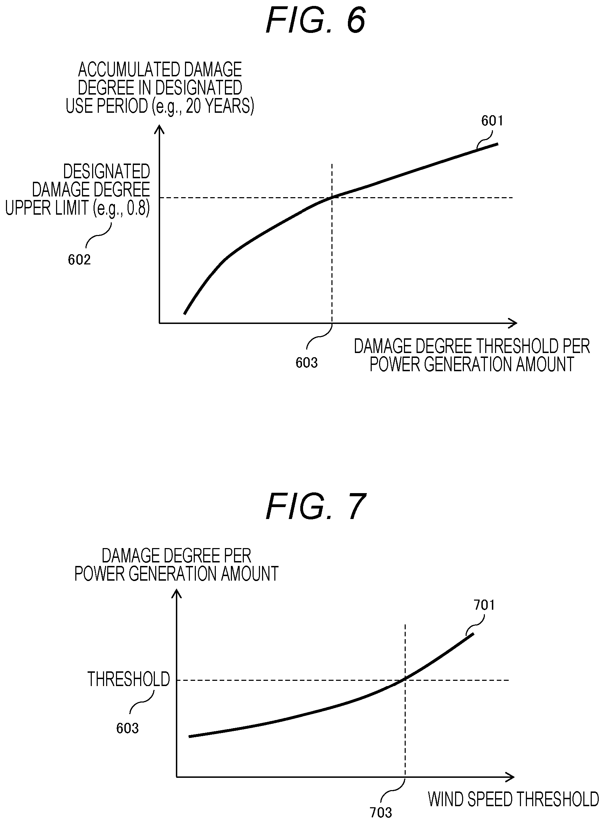

Next, in step S24 (FIG. 2), the input unit of use period and damage degree upper limit value 109 receives the user's input of the use period (for example, 20 years) and the upper limit value of the damage degree (for example, 0.8). In step S25, the calculation unit of damage degree threshold per power generation amount 111 calculates the damage degree threshold per power generation amount that reaches the damage degree upper limit value (for example, 0.8) in the input use period (for example, 20 years). Their relationship is illustrated in FIG. 6. FIG. 6 is an example of description of the calculation unit of damage degree threshold per power generation amount constituting the calculation processing unit illustrated in FIG. 1. Here, the accumulated damage degree in the designated use period is calculated by weighting the damage degree with frequency data of the wind speed, the wind direction, and the turbulence intensity in a certain period (for example, one year), and a value obtained by integrating cases where the damage degree is equal to or less than the damage degree threshold per power generation amount is calculated. That is, in the relationship 601 between the damage degree threshold per power generation amount and the accumulated damage, when the damage degree threshold per power generation amount increases, the accumulated damage degree in the designated use period also increases, and the damage degree threshold per power generation amount at which the accumulated damage degree matches the designated damage degree upper limit value 602 (603 in FIG. 6) is calculated. For this calculation, an optimization method such as a gradient method may be used, and the accumulated damage degree may be calculated by changing the damage degree threshold per power generation amount, and interpolation may be performed by polynomial approximation or the like.

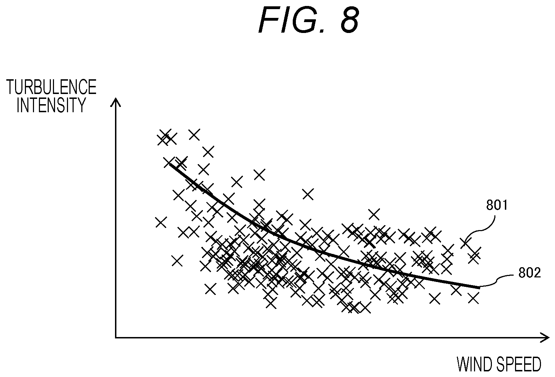

Next, in step S26, the calculation unit of wind speed threshold for each wind direction 112 converts the damage degree threshold per power generation amount calculated in step S25 into the wind speed threshold for each wind direction. This is because, as described above, the wind condition varies depending on the wind direction due to the influence of the topography and surrounding buildings, and thus the corresponding wind speed varies for each wind direction even with the same damage degree threshold per power generation amount. FIG. 7 is an explanatory diagram of the conversion. FIG. 7 is an example of description of the calculation unit of wind speed threshold for each wind direction constituting the calculation processing unit illustrated in FIG. 1. In the relationship 701 between the wind speed threshold and the damage degree per power generation amount, the wind speed threshold 703 corresponding to the damage degree threshold per power generation amount 603 calculated in step S25 is calculated. Here, the power generation amount is determined only from the wind speed from the power curve, but since the damage degree is determined from the damage database 401 and from the wind speed and the turbulence intensity, it is necessary to determine the value of the turbulence intensity with respect to the wind speed for each wind direction. FIG. 8 is a diagram illustrating an example of a relationship between the wind speed and the turbulence intensity. Here, as illustrated in FIG. 8, data of the turbulence intensity with respect to the wind speed for each wind direction (in FIG. 8, a plurality of plotted measured values of wind speed and turbulence intensity 801) is used, and for example, a representative value 802 (an average value, a median value, a 90 percentile value, or the like) of the turbulence intensity for each wind speed bin is used. As a result, the relationship 701 between the wind speed threshold and the damage degree per power generation amount indicated by the curve in FIG. 7 can be uniquely calculated for each wind direction, and the wind speed threshold 703 corresponding to the damage degree threshold per power generation amount 603 can be calculated. A graph similar to that of FIG. 8 is stored for each wind direction in a storage unit (not illustrated).

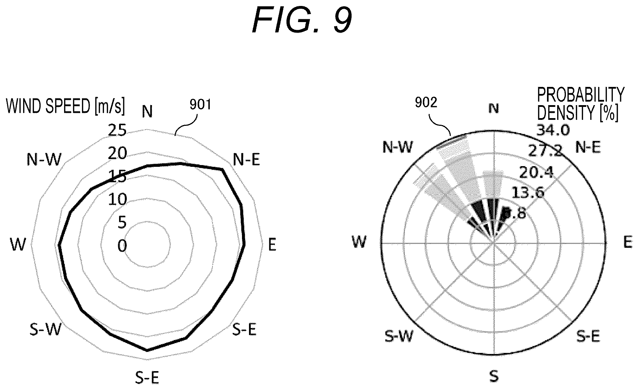

Next, in step S27, the display control unit of wind speed threshold for each wind direction 113 performs control to display the wind speed threshold for each wind direction on the screen of the output unit 107 constituting the input/output terminal 105. FIG. 9 is a diagram illustrating an example of wind speed threshold display for each wind direction. As illustrated in the left diagram of FIG. 9, a wind speed threshold for each wind direction 901 is displayed on a radar chart. Note that this display method is an example, and numerical values may be displayed in a bar graph format or a list format. Further, as illustrated in the right diagram of FIG. 9, the damage frequency for each wind direction 902 is displayed in a windrose (wind layout diagram) form as the damage occurrence frequency for each wind direction. A radial axis of the damage frequency for each wind direction 902 is an axis obtained by normalizing the occurrence frequency and converting the normalized occurrence frequency into a probability density, and the shading (gray scale gradation) indicates the damage degree. In this manner, by illustrating the wind speed threshold for each wind direction and the occurrence frequency of the damage, it is possible to support the user of the control support system 1 for the wind power generation apparatus in determining the wind speed at which the operation control is performed for each wind direction by sector management. Instead of shading (gray scale gradation) display, color-coding display may be performed for each damage degree. Although the wind speed threshold is displayed here, the wind speed threshold calculated here may be directly used for the control as the cutoff wind speed. In other words, step S27 is not essential, and the wind speed threshold 703 calculated in step S26 may be used as the cut-off wind speed directly for control without being particularly displayed on the screen.

As described above, according to the present embodiment, it is possible to provide a control support system for a wind power generation apparatus and a control support method for a wind power generation apparatus capable of minimizing component damage and maximizing the power generation amount.

In addition, with the configuration that receives input of the use period by the user, for example, when maintenance of the wind power generation apparatus is scheduled, the user can input a period until the maintenance as the use period. That is, it is possible to provide a control support system for a wind power generation apparatus and a control support method for a wind power generation apparatus capable of maximizing the power generation amount while preventing component damage until maintenance. In addition, for the purpose of extending the life of the wind power generation apparatus, the user can input "25 years" or "30 years" as the use period.

[Second Embodiment]

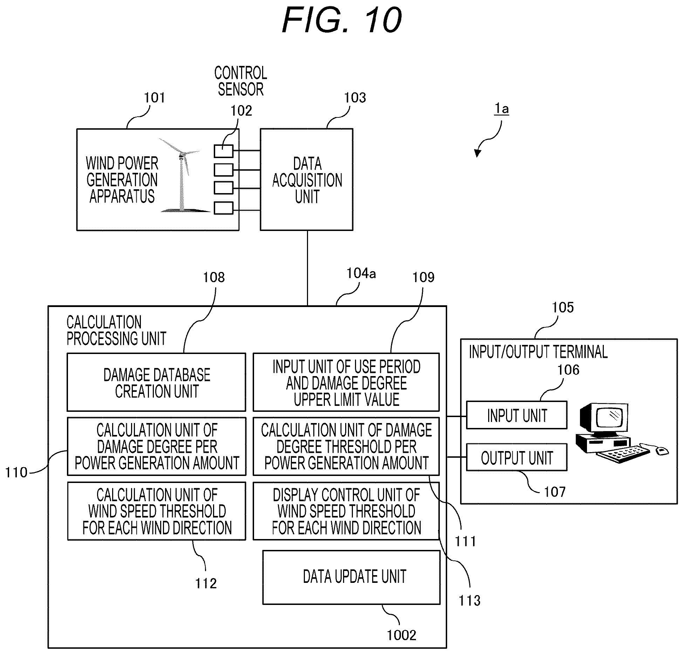

FIG. 10 is a diagram illustrating a schematic configuration of a control support system for a wind power generation apparatus according to a second embodiment of the present invention. As illustrated in FIG. 10, a calculation processing unit 104a constituting a control support system 1a of the wind power generation apparatus according to the present embodiment is different from that of the first embodiment in further including a data update unit 1002. Hereinafter, the same components as those in the first embodiment are denoted by the same reference numerals, and redundant description will be omitted.

As illustrated in FIG. 10, the calculation processing unit 104a constituting the control support system 1a of the wind power generation apparatus includes a data update unit 1002. In the control support system 1a for a wind power generation apparatus according to the present embodiment, the wind speed threshold for each wind direction is updated using the operation data after sector management is introduced. Here, the data update unit 1002 is realized by, for example, a processor (not illustrated) such as a CPU, a ROM (not illustrated) that stores various programs, a RAM (not illustrated) that temporarily stores data in a calculation process, and a storage device (not illustrated) such as an external storage device, and the processor such as the CPU reads and executes the various programs stored in the ROM, and stores a calculation result that is an execution result in the RAM or the external storage device.

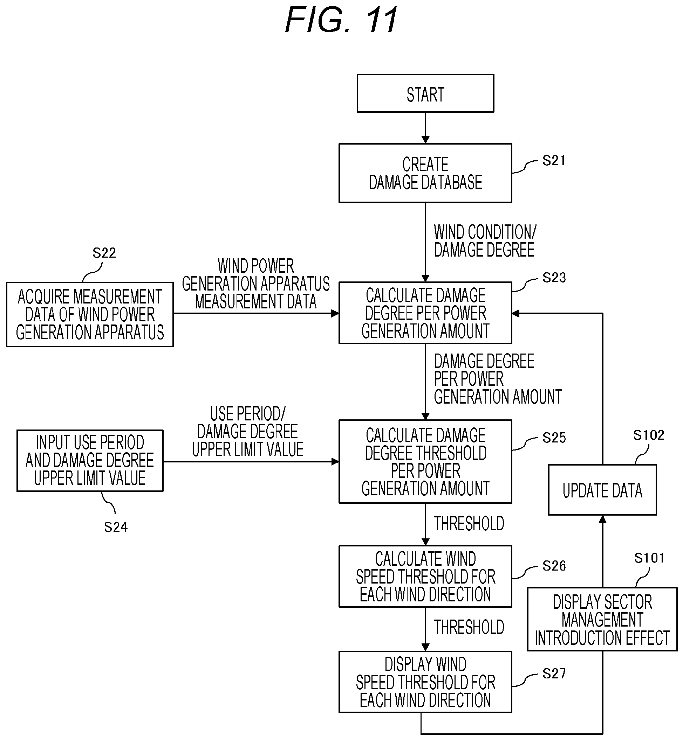

FIG. 11 is a flowchart illustrating a processing flow of the control support system for the wind power generation apparatus illustrated in FIG. 10. The wind speed threshold for each wind direction is displayed on the screen in step S27 described in the first embodiment, and then, in step S101, the display control unit of wind speed threshold for each wind direction 113 controls to display the sector management introduction effect on the screen of the output unit 107 constituting the input/output terminal 105.

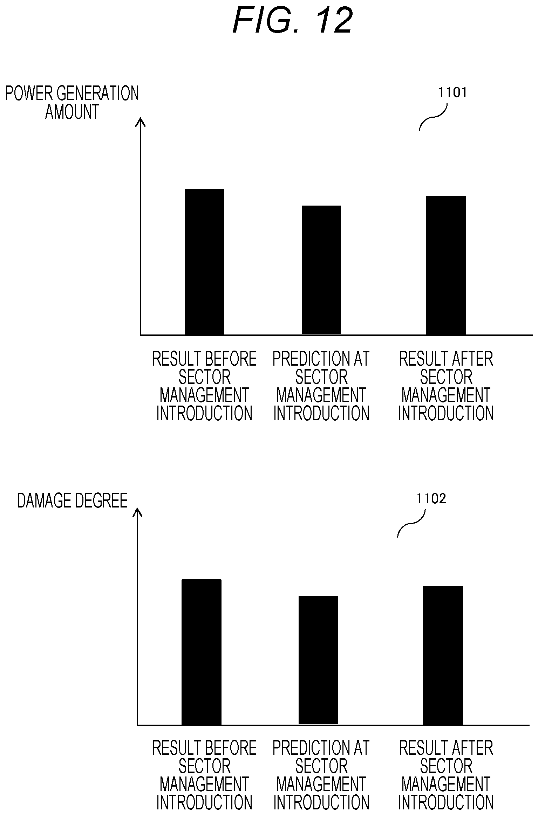

FIG. 12 is a diagram illustrating an example of sector management effect display. As illustrated in FIG. 12, the power generation amount and damage of the result before sector management introduction, the prediction at the time of introduction, and the result after introduction for a certain period (for example, 1 year) are displayed. Here, as described in the first embodiment, the prediction at the time of introduction is calculated using the wind speed threshold for each wind direction, the wind-condition data, and the damage database 401. Next, in step S102, the data update unit 1002 recalculates the wind speed threshold for each wind direction on the basis of the difference between the prediction at the time of introduction and the result after introduction, and returns to step S23. Specifically, the data update unit 1002 updates the result data such as the wind condition and the power generation amount, and repeats the calculation of the damage degree per power generation amount in step S23 (FIG. 11) and subsequent steps to update the wind speed threshold for each wind direction. Note that there is a slight difference between the prediction at the time of sector management introduction and the result after sector management introduction regarding the power generation amount and the damage degree illustrated in FIG. 12. This is because, even though the topography or the arrangement position of each wind power generation apparatus in the case of a wind farm, the wind-condition parameters, and the like are assumed in the prediction stage at the time of sector management introduction, the actual wind-condition parameters and the like change after the sector management is introduced.

In addition, a strain sensor may be installed in the wind power generation apparatus 101, the damage may be calculated from the measurement value, and the damage database may be updated.

As described above, according to the present embodiment, in addition to the effect of the first embodiment, by updating the wind speed threshold for each wind direction using the operation data after sector management is introduced, the wind power generation apparatus can be operated more efficiently.

[Third Embodiment]

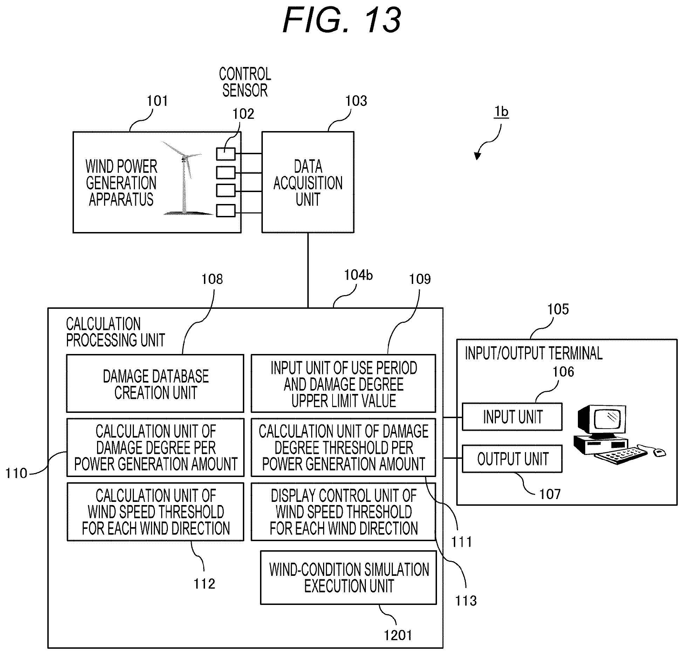

FIG. 13 is a diagram illustrating a schematic configuration of a control support system for a wind power generation apparatus according to a third embodiment of the present invention. As illustrated in FIG. 13, a calculation processing unit 104b constituting a control support system 1b for the wind power generation apparatus according to the present embodiment is different from that of the first embodiment in further including a wind-condition simulation execution unit 1201. Hereinafter, the same components as those in the first embodiment are denoted by the same reference numerals, and redundant description will be omitted.

As illustrated in FIG. 13, the calculation processing unit 104b constituting the control support system 1b for the wind power generation apparatus according to the present embodiment does not measure wind-condition data, but creates wind-condition data by performing wind-condition simulation in advance with the wind-condition simulation execution unit 1201. Here, the wind-condition simulation execution unit 1201 is realized by, for example, a processor such as a CPU (not illustrated), a ROM that stores various programs, a RAM that temporarily stores data in a calculation process, and a storage device such as an external storage device, and the processor such as the CPU reads and executes the various programs stored in the ROM and stores a calculation result that is an execution result in the RAM or the external storage device.

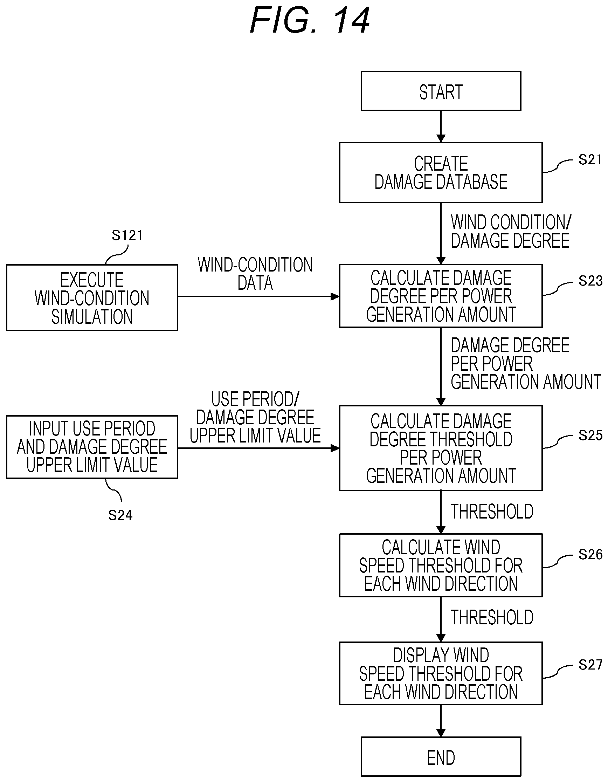

FIG. 14 is a flowchart illustrating a processing flow of the control support system for the wind power generation apparatus illustrated in FIG. 13. As illustrated in FIG. 14, in step S121, the wind-condition simulation execution unit 1201 creates wind-condition data instead of the data acquisition unit 103 (FIG. 1). In the wind-condition simulation, for example, wind-condition parameters, such as turbulence intensity and windshear, are calculated for each wind direction and wind speed by computational fluid dynamics (CFD) that models the topography and buildings around the wind power generation apparatus. The frequency of the wind speed and the wind direction is acquired from weather data or the like. In the case of the present embodiment, since there is no actual operation data of the power generation amount, the damage degree per power generation amount is calculated using the value of the power curve instead of actual operation data.

As described above, according to the present embodiment, in addition to the effects of the first embodiment, it is possible to review a method of introducing sector management before the operation of the wind power generation apparatus by using the wind-condition simulation.

[Fourth Embodiment]

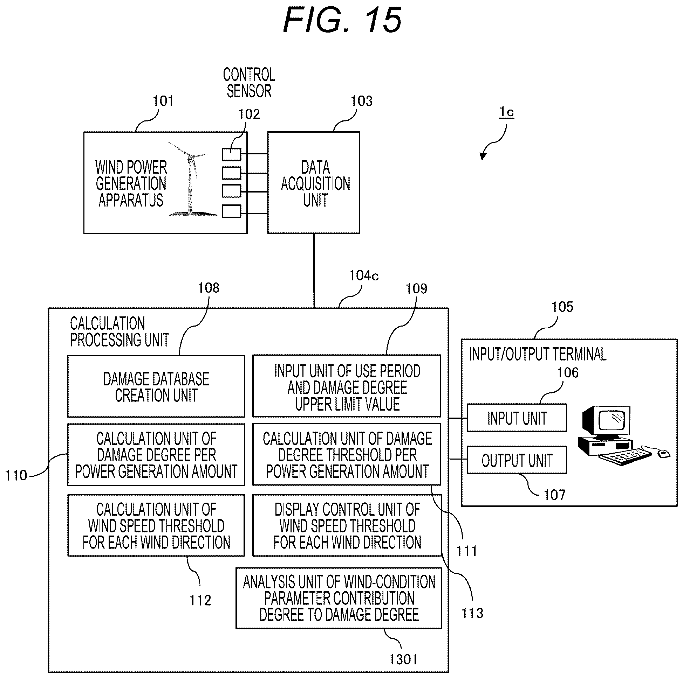

FIG. 15 is a diagram illustrating a schematic configuration of a control support system for a wind power generation apparatus according to a fourth embodiment of the present invention. As illustrated in FIG. 15, a calculation processing unit 104c constituting a control support system 1c for the wind power generation apparatus according to the present embodiment is different from that of the first embodiment in further including an analysis unit of wind-condition parameter contribution degree to damage degree 1301. Hereinafter, the same components as those in the first embodiment are denoted by the same reference numerals, and redundant description will be omitted.

As illustrated in FIG. 15, the calculation processing unit 104c constituting the control support system 1c of the wind power generation apparatus includes an analysis unit of wind-condition parameter contribution degree to damage degree 1301. The analysis unit of wind-condition parameter contribution degree to damage degree 1301 calculates the degrees of contribution of wind-condition parameters (wind speed, turbulence intensity, windshear, and the like) to the damage using the damage database 401. Here, the analysis unit of wind-condition parameter contribution degree to damage degree 1301 is realized by, for example, a processor such as a CPU (not illustrated), a ROM that stores various programs, a RAM that temporarily stores data in a calculation process, and a storage device such as an external storage device, and the processor such as the CPU reads and executes the various programs stored in the ROM and stores a calculation result that is an execution result in the RAM or the external storage device.

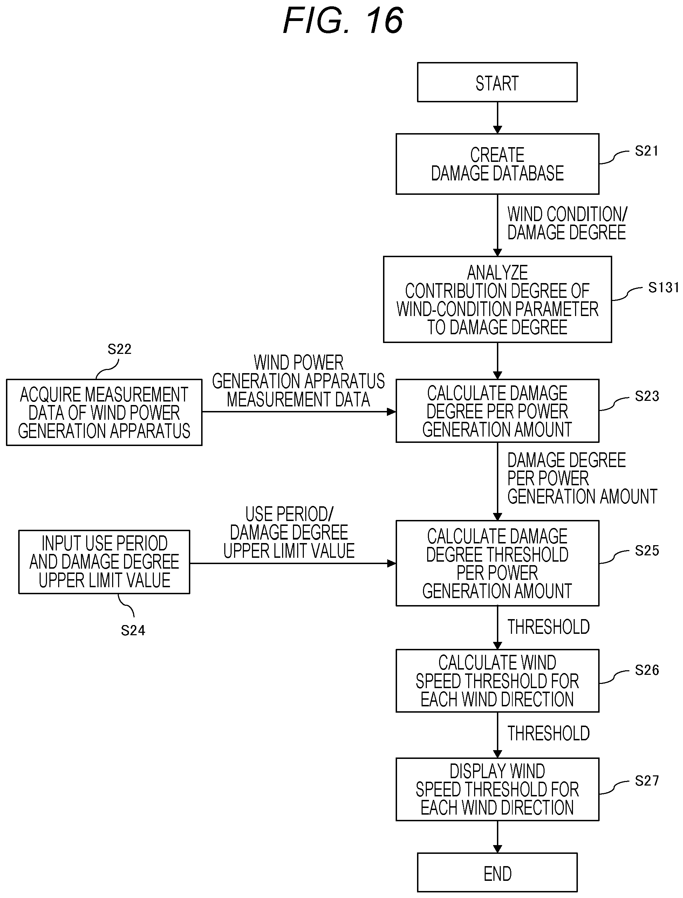

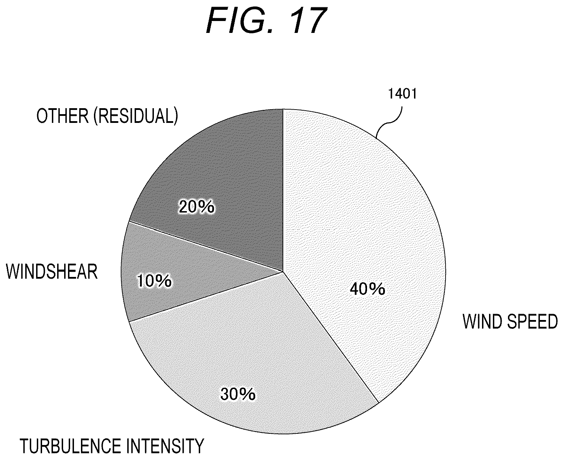

FIG. 16 is a flowchart illustrating a processing flow of the control support system for the wind power generation apparatus illustrated in FIG. 15. As illustrated in FIG. 16, in step S131, the analysis unit of wind-condition parameter contribution degree to damage degree 1301 calculates the contribution degrees of wind-condition parameters (wind speed, turbulence intensity, windshear, and the like) to the damage degree using the damage database 401. FIG. 17 is an example of display of an analysis result of the contribution degree of wind-condition parameters to the damage degree. In the analysis by the analysis unit of wind-condition parameter contribution degree to damage degree 1301, the contribution degree of each wind-condition parameter to the damage degree is calculated by a regression model of machine learning such as multiple regression analysis or random forest. Here, by determining the threshold for performing the operation control of the wind power generation apparatus 101 for each wind direction using a parameter having a high contribution degree, more efficient control can be performed. In the example of FIG. 17, operation restriction is performed by determining thresholds for wind speed and turbulence intensity for each wind direction. To determine these thresholds, in the same manner as in step S26 (FIG. 2) in the first embodiment described above, combinations that match the damage degree threshold per power generation amount are obtained by changing the thresholds of the two parameters, and the combinations are presented to the user of the control support system 1c of the wind power generation apparatus, and the system user selects from the combinations. In the example shown in FIG. 17, display of analysis result of wind-condition parameter contribution degree to damage degree 1401 shows a case where, in the circular graph, the contribution degree of "wind speed" to the damage degree is 40%, the contribution degree of "turbulence intensity" to the damage degree is 30%, the contribution degree of "windshear" to the damage degree is 10%, and the contribution degree of "other (residual)" to the damage degree is 20%.

As described above, according to the present embodiment, in addition to the effect of the first embodiment, the wind power generation apparatus can be operated more efficiently by executing sector management using wind-condition parameters that have a large contribution degree to the damage degree among a plurality of wind-condition parameters.

Note that the present invention is not limited to the above-described embodiments, and includes various modifications. For example, the above-described embodiments have been described in detail for easy understanding of the present invention, and are not necessarily limited to those having all the described configurations. In addition, a part of the configuration of a certain embodiment can be replaced with the configuration of another embodiment, and the configuration of another embodiment can be added to the configuration of a certain embodiment.

Reference Signs List

1, 1a, 1b, 1c control support system for wind power generation apparatus
101 wind power generation apparatus
102 control sensor
103 data acquisition unit
104, 104a, 104b, 104c calculation processing unit
105 input/output terminal
106 input unit
107 output unit
108 damage database creation unit

109 input unit of use period and damage degree upper limit value
110 calculation unit of damage degree per power generation amount
111 calculation unit of damage degree threshold per power generation amount
112 calculation unit of wind speed threshold for each wind direction
113 display control unit of wind speed threshold for each wind direction
301 external force calculation unit
302 deformation amount calculation unit
303 damage degree calculation unit
401 damage database
501 data format of damage degree per power generation amount
601 relationship between damage degree threshold per power generation amount and accumulated damage
602 designated damage degree upper limit value
603 damage degree threshold per power generation amount to be obtained
701 relationship between wind speed threshold and damage degree per power generation amount
703 wind speed threshold to be obtained
801 measured value of wind speed and turbulence intensity
802 representative value of wind speed and turbulence intensity
901 wind speed threshold for each wind direction
902 damage frequency for each wind direction
1002 data update unit
1101 display of power generation amount by sector management
1102 display of damage degree by sector management
1201 wind-condition simulation execution unit
1301 analysis unit of wind-condition parameter contribution degree to damage degree
1401 display of analysis result of wind-condition parameter contribution degree to damage degree

**Claims**

1. A control support system for a wind power generation apparatus comprising at least one wind power generation apparatus and a calculation processing unit, wherein
the calculation processing unit includes:

   a damage database creation unit configured to create a database of a damage degree that is caused in the wind power generation apparatus with respect to a wind-condition parameter;
   a calculation unit of damage degree per power generation amount configured to calculate a damage degree per power generation amount based on wind-condition data and operation data of the wind power generation apparatus;
   an input unit configured to receive input of a use period and a damage degree upper limit value of the wind power generation apparatus; and
   a calculation unit of wind speed threshold for each wind direction configured to calculate a wind speed threshold for operating the wind power generation apparatus for each wind direction based on the database of the damage degree and the use period and the damage degree upper limit value of the wind power generation apparatus.

2. The control support system for a wind power generation apparatus according to claim 1, wherein
the calculation processing unit includes a wind speed threshold display control unit configured to perform control to display the wind speed threshold on an input/output terminal.

3. The control support system for a wind power generation apparatus according to claim 1, wherein
the wind power generation apparatus is controlled using the wind speed threshold for each wind direction.

4. The control support system for a wind power generation apparatus according to claim 2, wherein
the damage database creation unit is configured to create the database of the damage degree by physical analysis.

5. The control support system for a wind power generation apparatus according to claim 2, wherein
the damage database creation unit is configured to create the database of the damage degree based on measurement data.

6. The control support system for a wind power generation apparatus according to claim 2, wherein

the calculation processing unit includes a data update unit, and
the data update unit is configured to update the wind speed threshold for each wind direction using operation result data after introduction of sector management.

7. The control support system for a wind power generation apparatus according to claim 2, wherein

the calculation processing unit includes a wind-condition simulation execution unit, and
the wind-condition simulation execution unit is configured to create wind-condition data by wind-condition simulation.

8. The control support system for a wind power generation apparatus according to claim 2, wherein

the calculation processing unit includes an analysis unit of wind-condition parameter contribution degree to damage degree, and
the analysis unit of wind-condition parameter contribution degree to damage degree is configured to analyze a contribution degree of the wind-condition parameter to the damage degree, and execute sector management using a threshold of a parameter having a high contribution degree.

9. A control support method for a wind power generation apparatus including at least one wind power generation apparatus and a calculation processing unit, the method comprising:

a damage database creation step of creating, by a damage database creation unit, a database of a damage degree that is caused in the wind power generation apparatus with respect to a wind-condition parameter;
a step of calculating, by a calculation unit of damage degree per power generation amount, a damage degree per power generation amount based on wind-condition data and operation data of the wind power generation apparatus; and
a step of receiving, by an input unit, input of a use period and a damage degree upper limit value of the wind power generation apparatus; and
a step of calculating, by a calculation unit of wind speed threshold for each wind direction, a wind speed threshold for operating the wind power generation apparatus for each wind direction based on the database of the damage degree and the use period and the damage degree upper limit value of the wind power generation apparatus.

10. The control support method for a wind power generation apparatus according to claim 9, further comprising a step of controlling, by a wind speed threshold display control unit, to display the wind speed threshold on an input/output terminal.

11. The control support method for a wind power generation apparatus according to claim 10, wherein the damage database creation step creates the database of the damage degree by physical analysis.

12. The control support method for a wind power generation apparatus according to claim 10, wherein the damage database creation step creates the database of the damage degree based on measurement data.

13. The control support method for a wind power generation apparatus according to claim 10, wherein a data update unit includes a step of updating the wind speed threshold for each wind direction using operation result data after introduction of sector management.

14. The control support method for a wind power generation apparatus according to claim 10, wherein a wind-condition simulation execution unit creates the wind-condition data by wind-condition simulation.

15. The control support method for a wind power generation apparatus according to claim 10, wherein an analysis unit of wind-condition parameter contribution degree to damage degree analyzes a contribution degree of the wind-condition parameter to the damage degree, and performs sector management using a parameter threshold having a high contribution degree.

# FIG. 1

CONTROL
SENSOR
102

101

WIND POWER
GENERATION
APPARATUS

103

DATA
ACQUISITION
UNIT

1

108                    104    109

CALCULATION
PROCESSING UNIT

| DAMAGE DATABASE CREATION UNIT | INPUT UNIT OF USE PERIOD AND DAMAGE DEGREE UPPER LIMIT VALUE |

105

INPUT/OUTPUT TERMINAL
106

110

| CALCULATION UNIT OF DAMAGE DEGREE PER POWER GENERATION AMOUNT | CALCULATION UNIT OF DAMAGE DEGREE THRESHOLD PER POWER GENERATION AMOUNT |

INPUT UNIT

| CALCULATION UNIT OF WIND SPEED THRESHOLD FOR EACH WIND DIRECTION | DISPLAY CONTROL UNIT OF WIND SPEED THRESHOLD FOR EACH WIND DIRECTION |

OUTPUT UNIT

107

111

112                    113

# FIG. 2

```
                                            ┌─────────────┐
                                            │    START    │
                                            └─────────────┘
                                                   │
                                                   ▼
                                            ┌─────────────┐
                                            │   CREATE    │──── S21
                                            │ DAMAGE DATABASE │
                                            └─────────────┘
                                                   │  WIND CONDITION/
                                                   │  DAMAGE DEGREE
                                                   ▼
         S22          WIND POWER           ┌─────────────┐
          │      GENERATION APPARATUS      │ CALCULATE DAMAGE │── S23
┌──────────────────┐  MEASUREMENT DATA     │ DEGREE PER POWER │
│ ACQUIRE MEASUREMENT │──────────────────▶ │ GENERATION AMOUNT │
│ DATA OF WIND POWER │                     └─────────────┘
│ GENERATION APPARATUS │                          │  DAMAGE DEGREE
└──────────────────┘                              │  PER POWER
                                                  │  GENERATION AMOUNT
                                                  ▼
                      USE PERIOD/        ┌─────────────┐
                      DAMAGE DEGREE      │ CALCULATE DAMAGE │── S25
┌──────────────────┐  UPPER LIMIT VALUE  │ DEGREE THRESHOLD │
│ INPUT USE PERIOD │──────────────────▶  │ PER POWER        │
│ AND DAMAGE DEGREE │                    │ GENERATION AMOUNT │
│ UPPER LIMIT VALUE │                    └─────────────┘
└──────────────────┘                            │  THRESHOLD
          │                                      ▼
         S24                            ┌─────────────┐
                                       │ CALCULATE WIND │── S26
                                       │ SPEED THRESHOLD FOR │
                                       │ EACH WIND DIRECTION │
                                       └─────────────┘
                                             │  THRESHOLD
                                             ▼
                                       ┌─────────────┐
                                       │ DISPLAY WIND │── S27
                                       │ SPEED THRESHOLD FOR │
                                       │ EACH WIND DIRECTION │
                                       └─────────────┘
                                             │
                                             ▼
                                       ┌─────────────┐
                                       │     END     │
                                       └─────────────┘
```

## FIG. 3

·BLADE AERODYNAMIC MODEL
·BLADE MASS DISTRIBUTION
·TOWER SHAPE

108

WIND-CONDITION DATA →

| EXTERNAL FORCE CALCULATION UNIT | 301 |

↓ EXTERNAL FORCE

WIND POWER
GENERATION APPARATUS
STRUCTURAL MODEL →

| DEFORMATION AMOUNT CALCULATION UNIT | 302 |

↓ DEFORMATION AMOUNT

| DAMAGE DEGREE CALCULATION UNIT | 303 |

DAMAGE DATABASE CREATION UNIT

## FIG. 4

401

| AVERAGE WIND SPEED [m/s] / TURBULENCE INTENSITY [%] | 4 | 6 | .... | 24 |
|---|---|---|---|---|
| 12 | 1.0e-6 | 1.2e-6 | ** | 2.6e-6 |
| 16 | | | ** | |
| .... | ** | ** | ** | ** |
| 28 | 1.4e-6 | 1.7e-6 | ** | 7.4e-6 |
| 32 | 1.5e-6 | 1.9e-6 | | 9.1e-6 |

## FIG. 5

501

| DATE AND TIME | AVERAGE WIND SPEED [m/s] | AVERAGE WIND DIRECTION [deg] | TURBULENCE INTENSITY [%] | AVERAGE POWER GENERATION AMOUNT [kW] | BLADE DAMAGE DEGREE [-] | BLADE DAMAGE DEGREE PER POWER GENERATION AMOUNT [/kW] |
|---|---|---|---|---|---|---|
| 2024/01/01 00:00:00 | 19.5 | 275.6 | 12.4 | 1994 | 2.3e-6 | 1.15e-9 |
| 2024/01/01 00:10:00 | 21.6 | 274.2 | 14.1 | 2000 | 2.4e-6 | 1.20e-9 |
| 2024/01/01 00:20:00 | 20.4 | 272.9 | 17.9 | 1986 | 3.0e-6 | 1.51e-9 |
| ... | ** | | ** | ** | ** | ** |

## FIG. 6

ACCUMULATED DAMAGE
DEGREE IN DESIGNATED
USE PERIOD (e.g., 20 YEARS)

601

DESIGNATED
DAMAGE DEGREE
UPPER LIMIT (e.g., 0.8)

602

603

DAMAGE DEGREE THRESHOLD PER
POWER GENERATION AMOUNT

## FIG. 7

DAMAGE DEGREE PER
POWER GENERATION AMOUNT

701

THRESHOLD

603

703

WIND SPEED THRESHOLD

# FIG. 8

TURBULENCE
INTENSITY

801

802

WIND SPEED

# FIG. 9

# FIG. 10

CONTROL SENSOR

101

102

103

1a

WIND POWER GENERATION APPARATUS

DATA ACQUISITION UNIT

108

104a

109

105

CALCULATION PROCESSING UNIT

INPUT/OUTPUT TERMINAL

106

| DAMAGE DATABASE CREATION UNIT | INPUT UNIT OF USE PERIOD AND DAMAGE DEGREE UPPER LIMIT VALUE | INPUT UNIT |

110

| CALCULATION UNIT OF DAMAGE DEGREE PER POWER GENERATION AMOUNT | CALCULATION UNIT OF DAMAGE DEGREE THRESHOLD PER POWER GENERATION AMOUNT | OUTPUT UNIT |

107

| CALCULATION UNIT OF WIND SPEED THRESHOLD FOR EACH WIND DIRECTION | DISPLAY CONTROL UNIT OF WIND SPEED THRESHOLD FOR EACH WIND DIRECTION |

111

DATA UPDATE UNIT

112

113

1002

# FIG. 11

START

CREATE
DAMAGE DATABASE — S21

WIND CONDITION/
DAMAGE DEGREE

S22

ACQUIRE MEASUREMENT
DATA OF WIND POWER
GENERATION APPARATUS

WIND POWER
GENERATION APPARATUS
MEASUREMENT DATA

CALCULATE DAMAGE
DEGREE PER POWER
GENERATION AMOUNT — S23

DAMAGE DEGREE
PER POWER
GENERATION AMOUNT

INPUT USE PERIOD
AND DAMAGE DEGREE
UPPER LIMIT VALUE

S24

USE PERIOD/
DAMAGE DEGREE
UPPER LIMIT VALUE

CALCULATE DAMAGE
DEGREE THRESHOLD
PER POWER
GENERATION AMOUNT — S25

THRESHOLD

CALCULATE WIND
SPEED THRESHOLD FOR
EACH WIND DIRECTION — S26

THRESHOLD

DISPLAY WIND
SPEED THRESHOLD FOR
EACH WIND DIRECTION — S27

S102

UPDATE DATA

S101

DISPLAY SECTOR
MANAGEMENT
INTRODUCTION EFFECT

# FIG. 12

POWER GENERATION
AMOUNT

1101

RESULT BEFORE
SECTOR
MANAGEMENT
INTRODUCTION

PREDICTION AT
SECTOR
MANAGEMENT
INTRODUCTION

RESULT AFTER
SECTOR
MANAGEMENT
INTRODUCTION

DAMAGE DEGREE

1102

RESULT BEFORE
SECTOR
MANAGEMENT
INTRODUCTION

PREDICTION AT
SECTOR
MANAGEMENT
INTRODUCTION

RESULT AFTER
SECTOR
MANAGEMENT
INTRODUCTION

# FIG. 13

CONTROL
SENSOR
101          102              103

| WIND POWER<br>GENERATION<br>APPARATUS | | DATA<br>ACQUISITION<br>UNIT |

1b

108          104b      109

105

CALCULATION
PROCESSING UNIT

| DAMAGE DATABASE<br>CREATION UNIT | INPUT UNIT OF USE PERIOD<br>AND DAMAGE DEGREE<br>UPPER LIMIT VALUE |

INPUT/OUTPUT TERMINAL
106

| CALCULATION UNIT OF<br>DAMAGE DEGREE PER<br>POWER GENERATION AMOUNT | CALCULATION UNIT OF DAMAGE<br>DEGREE THRESHOLD PER<br>POWER GENERATION AMOUNT |

INPUT UNIT

110

| CALCULATION UNIT OF<br>WIND SPEED THRESHOLD<br>FOR EACH WIND DIRECTION | DISPLAY CONTROL UNIT OF<br>WIND SPEED THRESHOLD<br>FOR EACH WIND DIRECTION |

OUTPUT UNIT

107

111

| | WIND-CONDITION SIMULATION<br>EXECUTION UNIT |

112          113

1201

# FIG. 14

```
                                    ┌─────────────┐
                                    │    START    │
                                    └──────┬──────┘
                                           │
                                           ▼
                                    ┌─────────────────┐
                                    │     CREATE      │  ─ S21
                                    │ DAMAGE DATABASE │
                                    └────────┬────────┘
                                             │  WIND CONDITION/
                                             │  DAMAGE DEGREE
        S121                                 ▼
┌─────────────────┐  WIND-CONDITION   ┌─────────────────┐
│     EXECUTE     │      DATA         │ CALCULATE DAMAGE│  ─ S23
│  WIND-CONDITION │ ─────────────────▶│ DEGREE PER POWER│
│   SIMULATION    │                   │GENERATION AMOUNT│
└─────────────────┘                   └────────┬────────┘
                                               │  DAMAGE DEGREE
                                               │  PER POWER
                                               │  GENERATION AMOUNT
                  USE PERIOD/                   ▼
                  DAMAGE DEGREE          ┌─────────────────┐
┌─────────────────┐ UPPER LIMIT VALUE   │ CALCULATE DAMAGE│  ─ S25
│ INPUT USE PERIOD│                     │DEGREE THRESHOLD │
│AND DAMAGE DEGREE│ ───────────────────▶│   PER POWER     │
│UPPER LIMIT VALUE│                     │GENERATION AMOUNT│
└─────────────────┘                     └────────┬────────┘
        S24                                       │  THRESHOLD
                                                  ▼
                                         ┌─────────────────┐
                                         │  CALCULATE WIND │  ─ S26
                                         │SPEED THRESHOLD FOR│
                                         │EACH WIND DIRECTION│
                                         └────────┬────────┘
                                                  │  THRESHOLD
                                                  ▼
                                         ┌─────────────────┐
                                         │  DISPLAY WIND   │  ─ S27
                                         │SPEED THRESHOLD FOR│
                                         │EACH WIND DIRECTION│
                                         └────────┬────────┘
                                                  │
                                                  ▼
                                           ┌─────────────┐
                                           │     END     │
                                           └─────────────┘
```

# FIG. 15

CONTROL
SENSOR

101     102     103             1c

| WIND POWER GENERATION APPARATUS | DATA ACQUISITION UNIT |
|---|---|

104c    109            105

108

CALCULATION PROCESSING UNIT

| DAMAGE DATABASE CREATION UNIT | INPUT UNIT OF USE PERIOD AND DAMAGE DEGREE UPPER LIMIT VALUE |
|---|---|

INPUT/OUTPUT TERMINAL
106

| CALCULATION UNIT OF DAMAGE DEGREE PER POWER GENERATION AMOUNT | CALCULATION UNIT OF DAMAGE DEGREE THRESHOLD PER POWER GENERATION AMOUNT |
|---|---|

INPUT UNIT

110

OUTPUT UNIT

107

| CALCULATION UNIT OF WIND SPEED THRESHOLD FOR EACH WIND DIRECTION | DISPLAY CONTROL UNIT OF WIND SPEED THRESHOLD FOR EACH WIND DIRECTION |
|---|---|

111

112

| | ANALYSIS UNIT OF WIND-CONDITION PARAMETER CONTRIBUTION DEGREE TO DAMAGE DEGREE |
|---|---|

113

1301

24

# FIG. 16

START

↓

CREATE DAMAGE DATABASE — S21

↓ WIND CONDITION/ DAMAGE DEGREE

ANALYZE CONTRIBUTION DEGREE OF WIND-CONDITION PARAMETER TO DAMAGE DEGREE — S131

↓

ACQUIRE MEASUREMENT DATA OF WIND POWER GENERATION APPARATUS — S22

WIND POWER GENERATION APPARATUS MEASUREMENT DATA →

CALCULATE DAMAGE DEGREE PER POWER GENERATION AMOUNT — S23

↓ DAMAGE DEGREE PER POWER GENERATION AMOUNT

INPUT USE PERIOD AND DAMAGE DEGREE UPPER LIMIT VALUE

S24

USE PERIOD/ DAMAGE DEGREE UPPER LIMIT VALUE →

CALCULATE DAMAGE DEGREE THRESHOLD PER POWER GENERATION AMOUNT — S25

↓ THRESHOLD

CALCULATE WIND SPEED THRESHOLD FOR EACH WIND DIRECTION — S26

↓ THRESHOLD

DISPLAY WIND SPEED THRESHOLD FOR EACH WIND DIRECTION — S27

↓

END

# FIG. 17

OTHER (RESIDUAL)

1401

20%

WINDSHEAR

10%

40%

WIND SPEED

30%

TURBULENCE INTENSITY

Europäisches
Patentamt

European
Patent Office

Office européen
des brevets

## EUROPEAN SEARCH REPORT

**Application Number**

EP 25 18 1927

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/340955 A1 (ZHANG PENGFEI [CN] ET AL) 4 November 2021 (2021-11-04) * paragraphs [0035], [0036] - [0053] * | 1-15 | INV. F03D7/02 F03D17/00 |
| X | CN 113 586 336 B (SHANGHAI ELECTRIC WIND POWER GROUP CO LTD) 25 November 2022 (2022-11-25) * paragraphs [0005] - [0019], [0049] - [0072] * | 1-15 | ADD. F03D7/04 |
| A | EP 3 575 985 A1 (NABLA WIND POWER S L [ES]) 4 December 2019 (2019-12-04) * the whole document * | 1-15 | |

**TECHNICAL FIELDS SEARCHED (IPC)**

F03D

The present search report has been drawn up for all claims

| Place of search | Date of completion of the search | Examiner |
|---|---|---|
| The Hague | 15 October 2025 | Libeaut, Laurent |

EPO FORM 1503 03.82 (P04C01)

## ANNEX TO THE EUROPEAN SEARCH REPORT
## ON EUROPEAN PATENT APPLICATION NO.

EP 25 18 1927

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2025

| Patent document cited in search report | | Publication date | Patent family member(s) | | Publication date |
|---|---|---|---|---|---|
| US 2021340955 A1 | | 04-11-2021 | AU | 2018334593 A1 | 15-08-2019 |
| | | | CN | 110094297 A | 06-08-2019 |
| | | | EP | 3540214 A1 | 18-09-2019 |
| | | | US | 2021340955 A1 | 04-11-2021 |
| | | | WO | 2019148772 A1 | 08-08-2019 |
| CN 113586336 | B | 25-11-2022 | NONE | | |
| EP 3575985 | A1 | 04-12-2019 | CN | 105492762 A | 13-04-2016 |
| | | | DK | 3026587 T3 | 02-12-2019 |
| | | | EP | 3026587 A1 | 01-06-2016 |
| | | | EP | 3575985 A1 | 04-12-2019 |
| | | | ES | 2759850 T3 | 12-05-2020 |
| | | | ES | 2860375 T3 | 05-10-2021 |
| | | | MX | 357317 B | 04-07-2018 |
| | | | PL | 3026587 T3 | 18-05-2020 |
| | | | PL | 3575985 T3 | 16-08-2021 |
| | | | PT | 3026587 T | 16-12-2019 |
| | | | PT | 3575985 T | 03-03-2021 |
| | | | US | 2016160842 A1 | 09-06-2016 |
| | | | WO | 2015011301 A1 | 29-01-2015 |

EPO FORM P0459

For more details about this annex : see Official Journal of the European Patent Office, No. 12/82

**EP 4 667 741 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5244502 B

- JP 2020112035 A